# EUROPÄISCHE PATENTSCHRIFT

(11) **EP 1 992 511 B1**
(45) Veröffentlichungstag und Bekanntmachung des Hinweises auf die Patenterteilung: **19.08.2009**
(21) Anmeldenummer: 07017793.6
(22) Anmeldetag: 11.09.2007
(51) Int. Cl.: B60J 1/20, B60J 7/06, B60J 7/00

(54) **Rollovorrichtung, insbesondere für ein Schiebedachsystem**
Roller blind device, in particular for a sliding roof system
Dispositif de store, en particulier pour un système de toit ouvrant

(30) Priorität: 04.05.2007 DE 102007021049; 31.08.2007 DE 102007041296
(43) Veröffentlichungstag der Anmeldung: 19.11.2008
(73) Patentinhaber: Webasto AG, 82131 Stockdorf (DE)
(72) Erfinder: Thalhammer, Marco, 86911 Diessen am Ammersee (DE); Schulz, Horst Martin, 86947 Weil (DE); Harnischfeger, Bernhard, 85221 Dachau (DE); Rockelmann, Andreas, 81249 München (DE); Steinle, Manfred, 86938 Schondorf (DE)
(74) Vertreter: Oberdorfer, Jürgen

(56) Entgegenhaltungen:
- EP-A- 1 127 722
- EP-A- 1 584 509
- DE-U1-5202005 006 41
- US-A- 4 825 921

## Beschreibung

Die Erfindung betrifft eine Rollovorrichtung, insbesondere für ein Schiebedachsystem nach dem Oberbegriff des Anspruchs 1.

Aus der DE 20 2005 006 415 U1 ist eine Baugruppe mit einem Rollo und zwei Spiralfedern bekannt, die sich entlang von Längsrändern des Rollos erstrecken. Die Spiralfedern sind in Führungen geführt. Die Rollovorrichtung weist eine Aufwickelhilfe auf, welche hinterhalb der Führungen mit der Spiralfeder zusammenwirkt. Die Rollobaugruppe kann wickelkernfrei ausgebildet sein.

Aus der EP 1 584 509 A2oder US 4825921 A ist ein Rollo für ein Schiebedachsystem bekannt, bei der eine Rollobahn mittels Spiralfedern um einen Wickelkern selbsttätig aufwickelbar ist. Es kann eine Wand vorgesehen sein, gegen die der Rollowickel läuft.

Bei diesen aus dem Stand der Technik bekannten Rollovorrichtungen ist von Nachteil, dass zum einen eine nur unbefriedigende Variabilität der Raumgestaltung des Rollowickels möglich ist. Zum anderen ist die geometrische Anpassbarkeit bzw. die Vielfalt der konstruktiven Anpassbarkeit solcher Rollovorrichtungen an umgebende Dachgeometrien oftmals nicht ausreichend. Weiterhin kann es aufgrund des Zusammenwirkens von Wickelhilfen direkt mit der Spiralfeder beim Ein- und Ausziehen des Rollos zu unerwünschtem Klemmen kommen. Hierdurch ist der Bedienkomfort des Rollos eingeschränkt.

Aufgabe der Erfindung ist es, eine Rollovorrichtung anzugeben, die zum einem einfach und kostengünstig aufgebaut ist und andererseits hinsichtlich der Raumform und der Kontur des Rollowickels eine hohe Variabilität ermöglicht und somit in einfacher Art und Weise konstruktiv an unterschiedlichste äußere Raumvorgaben anpassbar ist. Außerdem soll das optische Erscheinungsbild und der Bedienkomfort verbessert sein.Weiterhin soll sichergestellt werden, dass bei der Bedienung des Rollos kein Klemmen der Rollobahn oder sonstige Unregelmäßigkeiten auftreten.

Diese Aufgaben werden mit einer Rollovorrichtung mit den Merkmalen des Anspruchs 1 gelöst. Vorteilhafte Ausführungsformen sind in den Unteransprüchen angegeben.

Die Erfindung macht sich die Vorteile der selbstaufwickelnden Spiralfedern zu nutze, da eine derartige Wickelvorrichtung für Rollobahnen in einfacher Art und Weise eine wickelkernlose Aufwicklung der Rollobahn ermöglicht. Somit entsteht also in einem Bereich zwischen zwei Spiralfedern, die für die Aufwicklung der Rollobahn in einer Aufwickelrichtung verantwortlich sind, ein kernloser Rollowickel, welcher lediglich Rollobahnwicklungen besitzt und anstelle des Wickelkerns üblicher Rollovorrichtungen einen Hohlraum besitzt. Hierdurch kann der Rollowickel in einfacher Art und Weise in den Bereichen zwischen den Spiralfedern in seiner Raumform verformt werden, die insbesondere von einer zylindrischen oder nahezu zylindrischen Raumform abweicht. Weiterhin kann eine Längserstreckung des Rollowickels im Raum in weiten Grenzen frei gewählt werden, da ein wickelkernfreier Rollowickel lediglich bestehend aus der Rollobahn relativ einfach konturierbar, beispielsweise krümmbar oder in anderer Art und Weise abweichend von einer Geraden anzuordnen bzw. zu führen ist. Diesen Umstand nutzt die Erfindung und sieht in Bereichen zwischen den sich selbst aufwickelnden Spiralfedern eine Wickelformvorrichtung zur Formung und Führung, des Rollowickels vor.

Unter "Formung" des Rollowickels ist dabei im Sinne der Erfindung eine Beeinflussung des Querschnitts des Rollowickels zu verstehen. Unter "Führung" des Rollowickels ist im Sinne der Erfindung eine Konturierung des Verlaufs des Rollowickels entlang dessen Längsrichtung, insbesondere abweichend von einer Geraden gemeint. Hierfür eignen sich beispielsweise Krümmungen, welche z. B. an einen Dachverlauf in Fahrzeugquerrichtung eines Fahrzeuges angepasst sind. Im Folgenden bezieht sich also der Begriff der "Formung" auf eine Querschnittsraumform des Rollowickels und der Begriff "Führung" auf den Verlauf einer gedachten Längsmittelachse des Rollowickels entlang dessen Längserstreckung.

Zwar kann theoretisch die erfindungsgemäße Vorrichtung auch mit einem Wickelkern, beispielsweise einem biegsamen, stabartigen Mittelkern geringen Durchmessers ausgebildet sein, jedoch ist es zweifellos besonders vorteilhaft, die Rollovorrichtung wickelkernfrei auszubilden. Hier wird eine maximale Freiheit hinsichtlich der Formung und der Führung des Rollowickels erreicht.

Die Wickelformvorrichtung zur Formung und Führung des Rollowickels besitzt einen Wickelraum zur Aufnahme, Formung und Führung der Rollobahn.

In einer einfachst denkbaren Ausführungsform hat der Wickelraum im Querschnitt eine in etwa kreisrunde Raumform. Gleichwohl kann alternativ der Querschnitt des Wickelraumes im Wesentlichen oval abgeflacht ausgebildet sein, wobei eine gedachte Hauptachse des Ovals in oder parallel zur Rollobahnebene verläuft. Hierdurch ist eine besonders flache Ausbildung des Rollowickels möglich, wodurch insbesondere beim Einsatz der erfindungsgemäßen Rollovorrichtung als Rollovorrichtung für ein Schiebedachsystem eines Kraftfahrzeugs ein Bauraumgewinn in der Fahrzeughochrichtung realisierbar ist.

Gleichwohl ist es auch vorteilhaft, in bestimmten Anwendungsfällen die Hauptachse des Ovals im Wesentlichen senkrecht zur Bahnebene anzuordnen, wodurch bezogen auf die Aufwickel- und Einzugsrichtung der Rollovorrichtung eine relativ kurze Bauform realisierbar ist.

Je nach Einsatzzweck kann es auch zweckmäßig sein, die Hauptachse des Querschnittsovals des Wickelraums in einem Winkel α zwischen 0° und 90° zur Rollobahnebene zu neigen.

Es kann zudem zweckmäßig sein, dem Rollowickel entlang seiner Längserstreckung unterschiedliche Querschnittsraumformen aufzuzwingen. Beispielsweise ist es vorteilhaft, zum Rand der Rollobahn hin den Querschnitt des Rollowickels von einer zum Beispiel oval abgeflachten Raumform mehr und mehr einer Kreisform anzunähern, damit Verspannungen zu den Randbereichen der Rollobahn, in denen die sich kreisförmig aufwickelnden Spiralfedern angeordnet sind, möglichst gering gehalten werden. Hierdurch können unerwünschte Faltenbildungen der Rollobahn verhindert werden.

In einer weiteren besonderen Ausführungsform besitzt eine gedachte Mittellängsachse des Wickelraums, in dem der Rollowickel angeordnet ist und der Rollowickel um diese gedachte Linie auf- und abgewickelt wird, eine von einer Geraden abweichende Raumform, z. B. eine kurvenartige Krümmung. Hierdurch gelingt es insbesondere mittels der Wickelformvorrichtung zusätzlich oder alternativ zu einer Formung des Wickels auch eine Führung des Rollowickels herbeizuführen, indem der Wickelraum bzw. die den Wickelraum bildende oder umgrenzende Wickelformvorrichtung einen entsprechenden Verlauf im Raum aufweist. Beispielsweise kann eine Anpassung an eine Dachkrümmung erfolgen. Hierdurch wird insbesondere im Zusammenspiel mit einer Verformung, insbesondere Abflachung des Rollowickels im mittleren Bereich zwischen den Spiralfedern ein Bauraumgewinn in einer Fahrzeughochrichtung erreicht.

Zur Verminderung der Zahl der erforderlichen Einzelteile ist es besonders vorteilhaft, die Wickelformvorrichtung integriert in einen Dachrahmen auszubilden oder an diesem anzuformen.

Damit Krafteinflüsse der Wickelformvorrichtung auf die Rollobahn im Randbereich der Rollobahn so gering wie möglich ausgebildet sind und somit mögliche Faltenbildungen im Randbereich, insbesondere im Übergangsbereich zu den Spiralfedern verhindert ist, ist es vorteilhaft, die Wickelformvorrichtung in einem Mindestabstand a in Rollobahnquerrichtung von den Spiralfedern anzuordnen.

Der Mindestabstand a beträgt vorteilhafter Weise 5 mm bis 40 mm, insbesondere 5 mm bis 25 mm. Erfindungsgemäß soll jedenfalls ein berührendes Zusammenwirken zwischen der Wickelformvorrichtung und Spiralfedern am Rande der Rollobahn oder ggf. Spiralfedern in Bereichen innerhalb der Rollobahn vermieden werden.

Die Wickelformvorrichtung ist bevorzugt schalen- oder rinnenförmig ausgebildet oder umgibt einen Wickelraum nahezu vollständig und lässt lediglich einen Eintritts- bzw. Austrittsschlitz für die Rollobahn frei.

Gemäß einer weiteren Ausführungsform ist die Wickelformvorrichtung aus einer Vielzahl von im Wesentlichen spangenartigen Einzelvorrichtungen ausgebildet, welche sich jeweils über nur eine geringe Längserstreckung des Rollowickels erstrecken. Zwischen den einzelnen Wickelformvorrichtungseinzelteilen können ggf. auch Lücken vorhanden sein, in denen der Rollowickel frei läuft, d. h. nicht mit einer Wickelformvorrichtung zusammenwirkt.

Im Folgenden wird die Erfindung anhand der Zeichnung beispielhaft näher erläutert. Es zeigen:
- Figur 1:: schematisch eine erste Ausführungsform einer erfindungsgemäßen Rollovorrichtung in einer perspektivischen Darstellung;
- Figur 2:: schematisch eine Schnittdarstellung entlang der Linie A-A aus Figur 1;
- Figur 3:: eine zweite alternative Darstellung der Querschnittsraumform gemäß Figur 2;
- Figur 4:: eine dritte Alternative zur Querschnittsraumform gemäß Figur 2;
- Figur 5:: eine vierte Alternative zur Querschnittsraumform gemäß Figur 2, und
- Figur 6:: schematisch eine perspektivische Darstellung einer Wickelformvorrichtung für eine erfindungsgemäße Rollovorrichtung integriert in einen Dachrahmen eines Schiebedachs.

Eine erfindungsgemäße Rollovorrichtung 1 besitzt eine Rollobahn 2, welche um eine Wickelachse 3 in einer Wickelrichtung 4 zumindest einendig auf- und abwickelbar ist. Hierdurch entsteht um die Wickelachse 3 ein Rollowickel 5. An Längsrändern 6 der Rollobahn 2 sind selbstaufwickelnde Spiralfedern 7 mit der Rollobahn 2 verbunden. Die Spiralfedern 7 können ggf. in Führungsschienen (nicht gezeigt) geführt sein, wobei sich die Spiralfedern 7 selbsttätig um die Wickelachse 3 zu einer Spirale 8 zusammenrollen.

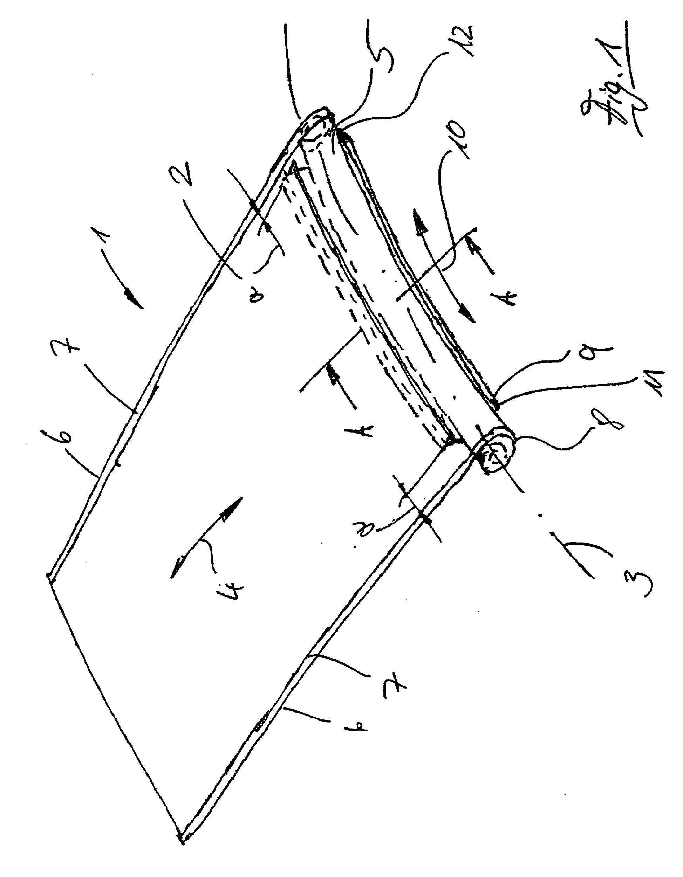

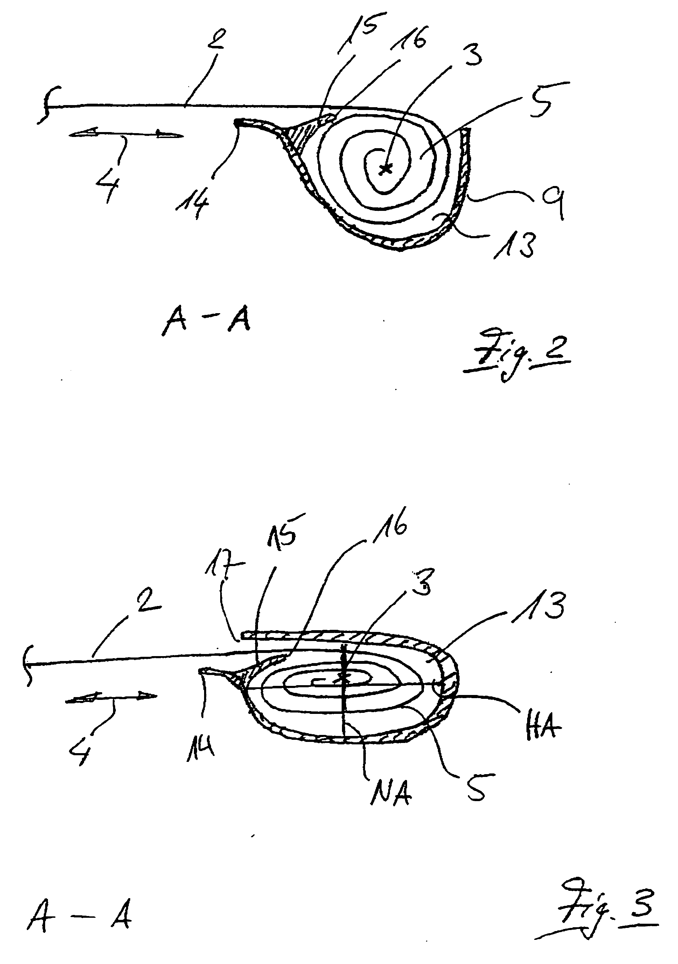

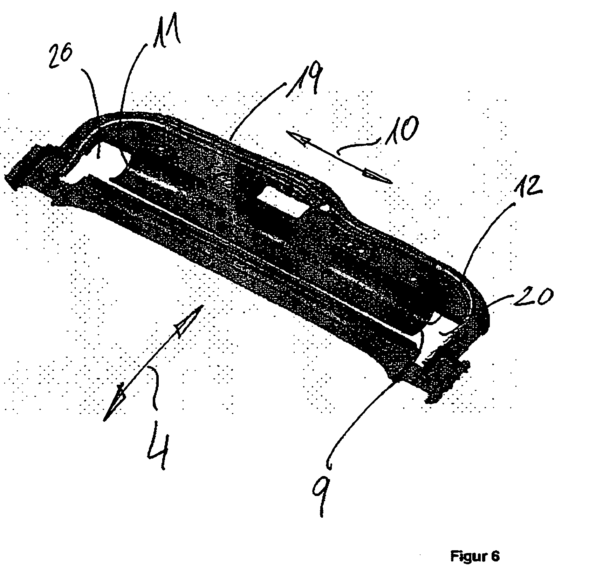

Zwischen den Spiralfedern 7, d. h. im Bereich der Rollobahn 2 ist eine Wickelformvorrichtung 9 angeordnet. Die Wickelformvorrichtung 9 ist in einer ersten Ausführungsform gemäß Figuren 1 und 6 im Wesentlichen rinnenförmig ausgebildet und erstreckt sich in einer Querrichtung 10 der Rollovorrichtung in einem Bereich zwischen den Spiralfedern 7, ohne mit diesen zusammenzuwirken. Hiefür ist ein erster freier Endbereich 11 und ein zweiter freier Endbereich 12 der Wickelformvorrichtung 9 in einem Mindestabstand a von der Spiralfeder 7 angeordnet. Der Mindestabstand a beträgt vorteilhafterweise zwischen 5 mm und 40 mm, insbesondere zwischen 5 mm und 25 mm. Der Mindestabstand a kann beidseitig der Rollobahn 2 gleich groß oder unterschiedlich groß ausgebildet sein. Die Wickelformvorrichtung 9 umgrenzt einen Wickelraum 13 (vgl. Figur 2), in dem der Rollowickel 5 im teilweisen oder vollständig aufgewickelten Zustand der Rollobahn 2 aufgenommen ist. Der Rollowickel 5 ist im beschriebenen Ausführungsbeispiel wickelkernlos. Die Wickelachse 3 ist somit nicht als geometrisch klar definierte Wickelachse zu verstehen, sondern als eine sich im Wesentlichen ergebende Wickelachse, die aufgrund der Weichheit und Verformbarkeit des aus der Rollobahn 2 gebildeten Rollowickels 5 einen gedachten Verlauf innerhalb des Wickelraums 13 besitzt.

Ein solcher gedachter und erwünschter Verlauf der Wickelachse 3 kann durch die Raumform der Wickelformvorrichtung 9 entlang der Querrichtung 10 des Rollowickels 5 beeinflusst werden. Beispielsweise kann eine Krümmung der Wickelformvorrichtung 9 entlang der Querrichtung 10 zu einer gekrümmten Anordnung bzw. zu einer gekrümmten Führung des Rollowickels 5 führen, so dass insbesondere eine Anpassung des Rollowickelverlaufs in Querrichtung 10 an eine Dachkrümmung eines Fahrzeuges ermöglicht ist. Insbesondere bei besonders breiten Rollovorrichtungen, d. h. bei Rollovorrichtungen mit einer besonders großen Erstreckung in Querrichtung 10 kann durch eine geeignete Formgebung der Wickelformvorrichtung 9 eine Konturierung der Wickelachse 3 des Rollowickels 5 erreicht werden. Beispielsweise kann in Randbereichen der Rollobahn 2 zunächst ein im Wesentlichen gerader Verlauf des Rollowickels 5 erreicht werden. Zwischen den geraden Bereichen des Rollowickels 5 kann ein gekrümmter Abschnitt konturiert werden. Hierdurch ist beispielsweise eine im Wesentlichen dachförmige Ausgestaltung der Rollovorrichtung 1 erzielbar. Somit kann mit der Wickelformvorrichtung 9 eine Konturierung, d. h. erfindungsgemäß eine Führung des Rollowickels 5 und eine Beeinflussung des Verlaufs der Wickelachse 3 erreicht werden.

In Figur 2 ist eine mögliche in etwa kreisrunde Querschnittsraumform der Wickelformvorrichtung 9 entlang der Schnittlinie A-A aus Figur 1 gezeigt. Dieser Schnitt liegt in etwa in der Mitte des Rollowickels 5 bezogen auf dessen Längserstreckung in Querrichtung 10. Die Wickelformvorrichtung 9 umgrenzt in etwa rinnenförmig den Wickelraum 13, in dem der Rollowickel 5 angeordnet ist. Die Wickelformvorrichtung 9 besitzt eine freie Kante 14, welche in Wickelrichtung 4, insbesondere in Ausziehrichtung der Rollobahn 2 weist.

Der freien Kante 14 ist ein Anschlagsteg 15 zugeordnet, dessen freie Kante 16 entgegen der Ausziehrichtung 4 weist. Der Anschlagsteg 15 dient beim Herausziehen der Rollobahn 2, d. h. beim Abziehen der Rollobahn 2 vom Rollowickel 5 als Anschlag für den Restrollwickel und sorgt für eine klemmfreie Abwicklung der Rollobahn 2.

In einer ersten Ausführungsform der Erfindung besitzt der Wickelraum 13 der Wickelformvorrichtung 9 eine im Querschnitt etwa kreisförmige Raumform, so dass sich beim Aufwickeln der Rollobahn 2 ein in etwa zylindrischer Rollowickel 5 bildet.

Gemäß einer weiteren Ausführungsform der Erfindung (Figur 3) ist die Querschnittsraumform des Wickelraumes 13 oval abgeflacht ausgebildet, wobei eine Hauptachse HA des Ovals in etwa parallel zur Erstreckungsebene der Rollobahn 2 ausgerichtet ist. Die Nebenachse NA ist in etwa vertikal zur Rollobahn 2 angeordnet. Eine derartige Ausgestaltung ermöglicht es z. B. im mittleren Bereich des Rollowickels 5 zwischen den Spiralfedern 7 eine deutliche Abflachung des Rollowickels 5 erzeugen. Hierdurch können beispielsweise im Einsatz der Rollovorrichtung als Sonnenabdeckungsvorrichtung für Schiebedachsysteme erhebliche Bauraumgewinne in der Fahrzeughochrichtung erreicht werden.

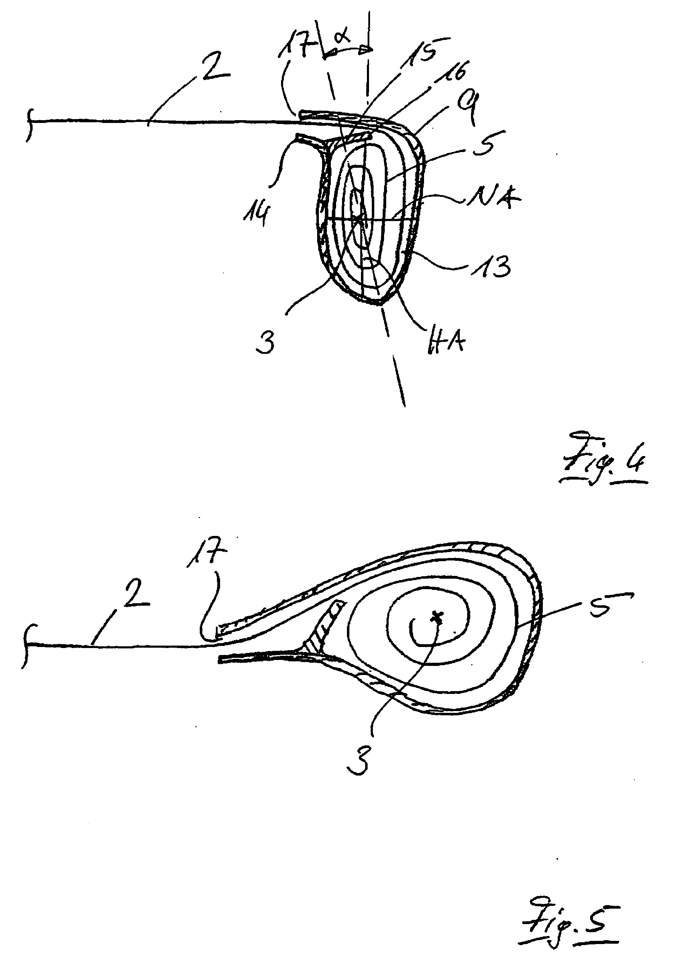

Bei einer weiteren Ausführungsform gemäß Figur 4 ist die Querschnittsraumform der Wickelformvorrichtung 9 ebenfalls im Wesentlichen oval ausgebildet, wobei die Hauptachse HA in etwa senkrecht auf der Bahnebene der Rollobahn 2 steht. Dementsprechend ist die Nebenachse NA in etwa parallel zur Rollobahnebene angeordnet. Hierdurch ist zwar eine in einer Richtung senkrecht zur Rollobahnebene höhere Bauform verursacht, jedoch kann beispielsweise eine Gesamtbaulänge der Rollovorrichtung 1 minimiert werden.

Weiterhin ist in Figur 4 angedeutet, dass die Hauptachse HA des Ovals des Wickelraums 13 auch in einem Winkel α zur Normalen der Rollobahnebene angeordnet sein kann. Hierdurch können in einfacher Art und Weise optimale Anpassungen an externe Geometriegegebenheiten ermöglicht werden. Der Winkel α kann im Bereich zwischen 0° und 90° liegen, wobei sich der Winkel α entlang der Querrichtung 10 auch verändern kann, so dass eine schraubenartige "Verwindung" des Wickelraumes in Querrichtung 10 verwirklichbar ist.

Bei den Ausführungsformen gemäß Figuren 2 bis 4 ist der Rollowickel 5 relativ zur Rollobahn 2 bzw. der Rollobahnebene derart angeordnet, dass die Rollobahnebene in etwa tangential vom Rollowickel 5 abgeht. Dies bedeutet, dass der Rollowickel 5 bzw. die Wickelachse 3 des Rollowickels 5 in jedem Fall versetzt zur Rollobahnebene angeordnet ist. Ist dies nicht erwünscht, so kann mittels einer Querschnittsformgebung gemäß Figur 5 die Wickelachse 3 in etwa auf der Höhe der Rollobahnebene angeordnet werden. Zunächst wird hierdurch die Rollobahn 2 vor dem Aufwickeln auf den Rollowickel 5 aus der Ebene der Rollobahn 2 abgelenkt. Anschließend gelangt die Rollobahn 2 in einen im Querschnitt etwa tropfenförmigen Wickelraum 13.

Sämtlichen Ausführungsformen gemäß Figuren 3 bis 5 ist gemeinsam, dass die Wickelformvorrichtung 9 z. B. mit einer Abdeckung 9a ausgebildet ist, den Rollowickel 5 nahezu vollständig umgibt und eine Schlitzöffnung 17 freilässt, aus der die Rollobahn 2 austreten kann. Eine solche Abdeckung 9a ist optional. Eine Formung und Führung des Rollowickels 5 ist auch mit einer rinnenförmigen Ausgestaltung der Wickelformvorrichtung 9 ohne Abdeckung 9a möglich, da sich der Rollowickel 5 z. B. nur durch den Einfluss der Schwerkraft in einem Bereich abgeflacht ausbilden lässt.

Besonders vorteilhaft ist es, den Querschnitt des von der Wickelformvorrichtung 9 umgrenzten oder definierten Wickelraums 3 entlang der Querrichtung 10 variabel zu gestalten. Beispielsweise kann etwa in der Mitte der Querrichtung 10 zwischen den Spiralfedern 7 eine abgeflachte Raumform gemäß Figur 3 oder eine verkürzte Raumform gemäß Figur 4 vorhanden sein und ein zu den Spiralfedern 7 hin zunehmend eine Formgebung des Rollowickels 5 in im Querschnitt kreisförmiger Art und Weise stattfinden. Hierdurch gelingt eine stetige und langsame, geschmeidige Anpassung des Rollowickelquerschnittes an den Wickelquerschnitt der Spiralfedern 7, die beispielsweise am Rande angeordnet sind. Hierdurch wird insbesondere unerwünschte Faltenbildung vermieden.

Figur 6 zeigt eine mögliche Anordnung der Wickelformvorrichtung 9 als angeformter oder integraler Bestandteil eines Dachrahmens 19 einer Schiebedachanordnung für ein Kraftfahrzeug. Die freien Endbereiche 11 und 12 sind dabei derart angeordnet, dass Freiräume 20 entstehen, in denen sich die Spiralfedern 7 ohne einem Zusammenwirken mit der Wickelformvorrichtung 9 frei auf- und abwickeln können. Hierdurch wird insbesondere eine Minimierung der Bauteilanzahl zur Ausbildung eines Sonnenschutzrollos für Schiebedachanordnungen erreicht.

In den Figuren 1 bis 6 ist eine im Wesentlichen in Querrichtung 10 einteilige Wickelformvorrichtung 9, 9a dargestellt. Gleichwohl kann anstelle einer einzigen, durchgehenden Wickelformvorrichtung 9, 9a auch eine Vielzahl von einzelnen Wickelformvorrichtungen 9, welche z. B. in etwa klammer- oder spangenförmig ausgebildet sind, vorgesehen sein. Zwischen den einzelnen spangenartigen Wickelformvorrichtungen 9 können durchaus auch Lücken bzw. Abstände vorhanden sein, in denen der Rollowickel 5 ungeführt bzw. ungeformt frei läuft. Eine derartige Ausgestaltung ist beispielsweise in der deutschen Patentanmeldung 10 2007 021 049 der Anmelderin beschrieben und dargestellt. Der Inhalt dieser Patentanmeldung, deren Priorität hierin beansprucht wird, wird ausdrücklich in die vorliegende Patentanmeldung aufgenommen.

Insbesondere kann die erfindungsgemäße Rollovorrichtung auch drehbar gelagerte Aufwickelelemente besitzen, die mit der Konstantkraftfeder bzw. mit der Spiralfeder 7 zusammenwirken. Derartige Aufwickelelemente sind beispielsweise gemäß der deutschen Patentanmeldung 10 2007 021 049 als Bolzen ausgebildet. Weiterhin wird der gesamte Inhalt der deutschen Patentanmeldung DE 10 2007 041 296.9 vollinhaltlich in diese Patentanmeldung aufgenommen. Die vorliegende Rollovorrichtung gemäß der Erfindung ist selbstverständlich auch ohne weiteres mit Führungsbahnen aufweisenden Aufsätzen auf Führungsschienen gemäß der genannten deutschen Patentanmeldung kombinierbar.

### Bezugszeichen:

- 1: Rollovorrichtung
- 2: Rollobahn
- 3: Wickelachse
- 4: Wickelrichtung
- 5: Rollowickel
- 6: Längsrändern
- 7: Spiralfedern
- 8: Spirale
- 9: Wickelformvorrichtung
- 9a: Abdeckung
- 10: Querrichtung
- 11: erster freier Endbereich
- 12: zweiter freier Endbereich
- 13: Wickelraum
- 14: freie Kante
- 15: Anschlagsteg
- 16: freie Kante
- 17: Schlitzöffnung
- 19: Dachrahmen
- 20: Freiräume

- HA: Hauptachse
- NA: Nebenachse
- a: Mindestabstand
- α: Winkel

## Patentansprüche

1. Rollovorrichtung, insbesondere für ein Schiebedachsystem aufweisend eine Rollobahn (2), welche mittels einer Wickelvorrichtung (7) zumindest einendig zu einem Rollowickel (5) aufwickelbar ist, wobei die Wickelvorrichtung (7) mit der Rollobahn (2) verbundene, sich selbst aufwickelnde Spiralfedern (7) umfasst, **dadurch gekennzeichnet, dass** eine Wickelformvorrichtung (9) zur Formung und/oder Führung des Rollowickels (5) vorhanden ist, wobei die Wickelformvorrichtung (9) ausschließlich in Bahnbereichen der Rollobahn (2) zwischen den Spiralfedern (7) mit der Rollobahn (2) zusammenwirkt.

2. Rollovorrichtung nach Anspruch 1, **dadurch gekennzeichnet, dass** die Rollovorrichtung wickelkernfrei ausgebildet ist.

3. Rollovorrichtung nach Anspruch 1 oder 2, **dadurch gekennzeichnet, dass** die Wickelformvorrichtung (9) einen Wickelraum (13) zur Aufnahme des Rollowickels (5) aufweist.

4. Rollovorrichtung nach Anspruch 3 **dadurch gekennzeichnet, dass** der Wickelraum (13) im Querschnitt im Wesentlichen kreisrund ausgebildet ist.

5. Rollovorrichtung nach Anspruch 3 **dadurch gekennzeichnet, dass** der Wickelraum (13) im Querschnitt oval abgeflacht ausgebildet ist.

6. Rollovorrichtung nach Anspruch 5 **dadurch gekennzeichnet, dass** eine Hauptachse (HA) des oval abgeflachten Querschnitts im Wesentlichen parallel zur oder in der Bahnebene der Rollobahn (2) verläuft.

7. Rollovorrichtung nach Anspruch 5, **dadurch gekennzeichnet, dass** die Hauptachse (HA) des oval abgeflachten Querschnitts im Wesentlichen normal zur Bahnebene der Rollobahn (2) verläuft.

8. Rollovorrichtung nach Anspruch 5, **dadurch gekennzeichnet, dass** die Hauptachse (HA) des oval abgeflachten Querschnitts in einem Winkel α geneigt zur Bahnebene der Rollobahn (2) verläuft.

9. Rollovorrichtung nach einem der vorhergehenden Ansprüche 3 bis 8, **dadurch gekennzeichnet, dass** der Wickelraum (13) entlang der Längserstreckung, d. h. in einer Querrichtung (10) des Rollowickels (5) eine im Querschnitt veränderliche Querschnittsraumform besitzt.

10. Rollovorrichtung nach einem der vorhergehenden Ansprüche 3 bis 9, **dadurch gekennzeichnet, dass** sich der Wickelraum (13) im Querschnitt zu den Spiralfedern (7) hin einer kreisförmigen Raumform annähert.

11. Rollovorrichtung nach einem der vorhergehenden Ansprüche, **dadurch gekennzeichnet, dass** entlang des Rollowickels (5) eine Vielzahl von Wickelformvorrichtungen (9) angeordnet sind.

12. Rollovorrichtung nach Anspruch 11, **dadurch gekennzeichnet, dass** eine Wickelformvorrichtung (9) an einem Dachrahmen (19) angeformt oder in diesem integriert ausgebildet ist.

13. Rollovorrichtung nach Anspruch 12, **dadurch gekennzeichnet, dass** die Wickelformvorrichtung (9) entlang der Längserstreckung des Rollowickels (5) konturiert, insbesondere gekrümmt ausgebildet ist.

14. Rollovorrichtung nach einem der vorhergehenden Ansprüche 12, 13, **dadurch gekennzeichnet, dass** freie Endbereiche (11, 12) der Wickelformvorrichtung (9) einen Mindestabstand (a) in Rollobahnquerrichtung (10) von den Spiralfedern (7) aufweist.

15. Rollovorrichtung nach einem der vorhergehenden Ansprüche 12-14, **dadurch gekennzeichnet, dass** die Wickelformvorrichtung (9) dem Rollowickel (5) im Wesentlichen vollständig umgibt und eine Schlitzöffnung (17) für die Rollobahn (2) aufweist.

16. Rollovorrichtung nach einem der vorhergehenden Ansprüche 12-15, **dadurch gekennzeichnet, dass** die Wickelformvorrichtung (9) im Wesentlichen schalen- oder rinnenförmig ausgebildet ist.

## Claims

1. Roller blind device, in particular for a sliding roof system, comprising a roller blind web (2) which can be wound by means of a winding device (7) at least at one end to form a roller blind roll (5), wherein the winding device (7) comprises self-winding spiral springs (7) connected to the roller blind web (2), **characterised in that** a roll forming device (9) is provided for forming and/or guiding the roller blind roll (5), wherein the roll forming device (9) cooperates with the roller blind web (2) exclusively in web areas of the roller blind web (2) between the spiral springs (7).

2. Roller blind device according to claim 1, **characterised in that** the roller blind device is formed without a roll core.

3. Roller blind device according to claim 1 or 2, **characterised in that** the roll forming device (9) comprises a roll space (13) for receiving the roller blind roll (5).

4. Roller blind device according to claim 3, **characterised in that** the roll space (13) is configured with a substantially circular cross-section.

5. Roller blind device according to claim 3, **characterised in that** the roll space (13) is configured with an ovally flattened cross-section.

6. Roller blind device according to claim 5, **characterised in that** a major axis (HA) of the ovally flattened cross-section extends substantially parallel to or in the web plane of the roller blind web (2).

7. Roller blind device according to claim 5, **characterised in that** the major axis (HA) of the ovally flattened cross-section extends substantially normal to the web plane of the roller blind web (2).

8. Roller blind device according to claim 5, **characterised in that** the major axis (HA) of the ovally flattened cross-section extends inclined at an angle α to the web plane of the roller blind web (2).

9. Roller blind device according to one of the preceding claims 3 to 8, **characterised in that** the roll space (13) has a cross-sectional spatial shape variable in its cross-section along the longitudinal extent, i.e. in a transverse direction (10) of the roller blind roll (5).

10. Roller blind device according to one of the preceding claims 3 to 9, **characterised in that** the cross-section of the roll space (13) approximates a circular spatial shape towards the spiral springs (7).

11. Roller blind device according to one of the preceding claims, **characterised in that** a plurality of roll forming devices (9) are disposed along the roller blind roll (5).

12. Roller blind device according to claim 11, **characterised in that** a roll forming device (9) is configured formed onto or integrated in a roof frame (19).

13. Roller blind device according to claim 12, **characterised in that** the roll forming device (9) is formed to be contoured, in particular curved, along the longitudinal extent of the roller blind roll (5).

14. Roller blind device according to one of the preceding claims 12, 13, **characterised in that** free end portions (11, 12) of the roll forming device (9) have a minimum distance (a), in the transverse direction of the roller blind web (10), from the spiral springs (7).

15. Roller blind device according to one of the preceding claims 12 to 14, **characterised in that** the roll forming device (9) encloses the roller blind roll (5) substantially completely and comprises a slot opening (17) for the roller blind web (2).

16. Roller blind device according to one of the preceding claims 12 to 15, **characterised in that** the roll forming device (9) is formed substantially shell-shaped or trough-shaped.

## Revendications

1. Dispositif à store à enrouleur, en particulier pour un système de toit ouvrant, comprenant une bande de store (2), qui peut être enroulée au moyen d'un dispositif d'enroulement (7) au moins à une extrémité pour former un enroulement de store (5), le dispositif d'enroulement (7) comprenant des ressorts spiralés (7) reliés à la bande de store (2), et s'enroulant par eux-mêmes, **caractérisé en ce qu'**il est prévu un dispositif de formage d'enroulement (9) pour former et/ou guider l'enroulement de store (5), ledit dispositif de formage d'enroulement (9) coopérant avec la bande de store (2) exclusivement dans les régions de la bande de store (2) entre les ressorts spiralés (7).

2. Dispositif de store à enrouleur selon la revendication 1, **caractérisé en ce que** le dispositif de store à enrouleur est réalisé exempt de noyau d'enroulement.

3. Dispositif de store à enrouleur selon la revendication 1 ou 2, **caractérisé en ce que** le dispositif de formage d'enroulement (9) comprend une chambre d'enroulement (13) pour recevoir l'enroulement de store (5).

4. Dispositif de store à enrouleur selon la revendication 3, **caractérisé en ce que** la chambre d'enroulement (13) est réalisée avec une section transversale essentiellement circulaire.

5. Dispositif de store à enrouleur selon la revendication 3, **caractérisé en ce que** la chambre d'enroulement (13) est réalisée aplatie de forme ovale en section transversale.

6. Dispositif de store à enrouleur selon la revendication 5, **caractérisé en ce qu'**un axe principal (HA) de la section aplatie de forme ovale s'étend essentiellement parallèlement au plan de la bande de store (2) ou dans ce plan.

7. Dispositif de store à enrouleur selon la revendication 5, **caractérisé en ce que** l'axe principal de la section aplatie de forme ovale s'étend essentiellement perpendiculairement au plan de la bande de store (2).

8. Dispositif de store à enrouleur selon la revendication 5, **caractérisé en ce que** l'axe principal (HA) de la section aplatie de forme ovale s'étend de façon inclinée d'un angle α par rapport au plan de la bande de store (2).

9. Dispositif de store à enrouleur selon l'une des revendications 3 à 8, **caractérisé en ce que** la chambre d'enroulement (13) possède une forme de section transversale variable le long de l'extension longitudinale, c'est-à-dire dans une direction transversale (10) de l'enroulement de store (5).

10. Dispositif de store à enrouleur selon l'une des revendications précédentes 3 à 9, **caractérisé en ce que** la chambre d'enroulement (13) se rapproche, dans une section transversale par rapport aux ressorts spiralés (7), d'une forme circulaire.

11. Dispositif de store à enrouleur selon l'une des revendications précédentes, **caractérisé en ce qu'**une pluralité de dispositifs de formage d'enroulement (9) sont agencés le long de l'enroulement de store (5).

12. Dispositif de store à enrouleur selon la revendication 11, **caractérisé en ce que** le dispositif de formage d'enroulement (9) est formé sur un cadre de toiture, ou est réalisé intégré dans celui-ci.

13. Dispositif de store à enrouleur selon la revendication 12, **caractérisé en ce que** le dispositif de formage d'enroulement (9) est contouré le long de l'extension longitudinale de l'enroulement de store (5), en particulier réalisé de manière incurvée.

14. Dispositif de store à enrouleur selon l'une des revendications précédentes 12 et 13, **caractérisé en ce que** les régions d'extrémité libre (11, 12) du dispositif de formage d'enroulement (9) présentent une distance minimum (a) vis-à-vis des ressorts spiralés (7) dans la direction transversale à la bande de store (10).

15. Dispositif de store à enrouleur selon l'une des revendications précédentes 12 à 14, **caractérisé en ce que** le dispositif de formage d'enroulement (9) entoure sensiblement complètement l'enroulement de store (5), est présente une ouverture en fente (17) pour la bande de store.

16. Dispositif de store à enrouleur selon l'une des revendications précédentes 12 à 15, **caractérisé en ce que** le dispositif de formage d'enroulement (9) est réalisé essentiellement en forme de coque ou en forme de goulotte.
